# EUROPEAN PATENT APPLICATION

(11) **EP 0 894 968 A1**
(43) Date of publication of application: **03.02.1999**
(21) Application number: 97112955.6
(22) Date of filing: 28.07.1997
(51) Int. Cl.: F02M 21/02, F15C 3/04

(54) **Injection device capable of phasing the flow rate of a gaseous fuel (l.p.g. or methane) which feeds an internal combustion engine**

(71) Applicant: SEIMA ITALIANA SPA, I-33028 Tolmezzo (UD) (IT)
(72) Inventor: Bertossi, Bruno, Ing., 33013 Gemona del Friuli (Udine) (IT); Vezzil, Stefano, 33028 Tolmezzo (Udine) (IT)
(74) Representative: Rinaldi, Carlo

(57) **Abstract**

An injection device capable of phasing the flow rate of a gaseous fuel feeding an internal combustion engine comprises a metering valve (2) and a timed valve (3); the metering valve (2) has an inlet (11) connected to the pressure reducer (6), mechanical elements (9,10) for metering the fuel to be sent to the timed valve (3), a step motor (8) for manoeuvring the mechanical elements (9,10) according to control signals processed by a central control unit (1); the timed valve (3) presents two separate inlets (13,14) communicating with the outlet (12) of the metering valve (2), two separate outlets (15,16) respectively connected to the intake tubes (17,18) of two cylinders (19,20) in phase opposition and movable closing means (65) sensitive to the vacuum inside the intake tube (17,18) of the cylinder (19,20) in intake stroke, said movable closing means (65) being capable of intercepting the sending of the fuel to the intake pipe (17,18) of the cylinder (19,20) in intake stroke.

## Description

### BACKGROUND OF THE INVENTION

The present invention relates to an injection device capable of delivering a flow rate of a gaseous fuel (l.p.g. or methane) in phase with at least one stroke of the thermodynamic cycle of an internal combustion engine for motor vehicles or stationary installations. The injectors delivering a continuous flow rate of gaseous fuel for said engines consist of metering and timed valves; these valves are used for delivering the fuel during the strokes of the thermodynamic cycle of the engines so that the entrance of the gas into the combustion chambers can be synchronised with said strokes.

### STATE OF THE TECHNIQUE

EP-A-0 563 223 relates to an equipment capable of injecting a gaseous fuel into engines fitted with several cylinders; the equipment comprises metering and timed valves; the latter are located near the inlet valves of the engine; each inlet valve is fed by its own injecting valve. The metering valve presents an opening connected to a cylinder by means of its own pipe. Each timed valve consists of a seat and a diaphragm which is stretched to rest against the seat when under no load. The atmospheric pressure acts on a side of the diaphragm.

The equipment described in EP-A-0 563 223 presents the following disadvantages:
A- Essentially, the metering valve, connected to the pressure reducer, consists of a cavity communicating with the cylinders by means of separate apertures; during the operating of the engine, the fluids inside the cavity are subjected to pulsations due to the alternating strokes of the thermodynamic and mechanical cycle of the engine; these pulsations change the flow rate and strength of the mixture feeding the engine;
B- The side of the diaphragm not loaded by the fuel pressure communicates with the atmosphere, the pressure of which depends on the altitude and other known causes; therefore, the carburation process depends on these causes in an uncontrolled way.

EP-97103705.6 regards an equipment feeding an internal combustion engine with a gaseous fuel, in which metering and timed valves form the injection valves. A central control unit sends signals controlling the metering valves according to the working state of the engine; the metering valves deliver a fuel flow rate defined by the central control unit to the timed valves. These are connected to the intake manifold downstream of the throttle valve to compensate the pressure peaks due to the succeeding cycles of the engine. This solution allows to solve the problems due to the differences in the values of the atmospheric pressure and pressure peaks due the succeeding cycles of the engine; nevertheless, it presents the disadvantage to have a timed valve for each combustion chamber; in addition, the suction pressure acting on the timed valves does not vary during one or more cycles of the engine; therefore, the timed valve relative to one combustion chamber is not affected by the pressure variations during the cycle strokes.

### AIM OF THE INVENTION

The purpose of this invention is to remedy these defects. The invention, as claimed, solves the problem of creating an injection device capable of phasing the flow rate of a gaseous fuel (l.p.g. or methane) which feeds an internal combustion engine. By means of the present invention, the fuel is sent to the engine combustion chambers considering the strokes of the thermodynamic cycle so that the mixture may reach a remarkable grade of homogeneity before its entrance into said chambers.

The injection device according to the present invention comprises metering and timed valves; the metering valves present inlets connected to a pressure reducer, mechanical elements for metering the fuel to be sent to the relative timed valves, electromechanical apparatuses for manoeuvring the mechanical elements according to control signals processed by a central control unit; the timed valves presenting two separate inlets communicating with the outlet of the respective metering valves, two separate outlets respectively connected to the inlet pipes of two in phase opposition cylinders together with closing means sensitive to the vacuum inside the intake pipe of the in intake stroke cylinder to negate the fuel delivery to the intake pipe of said in intake stroke cylinder.

### BRIEF DESCRIPTION OF THE DRAWINGS

Other advantages, features and aims of the invention, may be more readily understood by referring to the accompanying drawings, which concern preferred embodiments, in which:
Fig.1 schematically represents a device capable of injecting a gaseous fuel with a metering valve according to a first embodiment of the invention and with a timed valve connected to two combustion chambers;
Fig.2 shows the injection device consisting of a second embodiment of the metering valve connected to the timed valve;
Fig.3 shows the injection device fitted with a third embodiment of the metering valve connected to the timed valve;
Fig.4 represents the timed valve with a diaphragm in a first position;
Fig.5 shows the timed valve with the diaphragm in a second position;
Fig.6 shows the timed valve with the diaphragm in a third position.

### DESCRIPTION OF PREFERRED EMBODIMENTS OF THE INVENTION

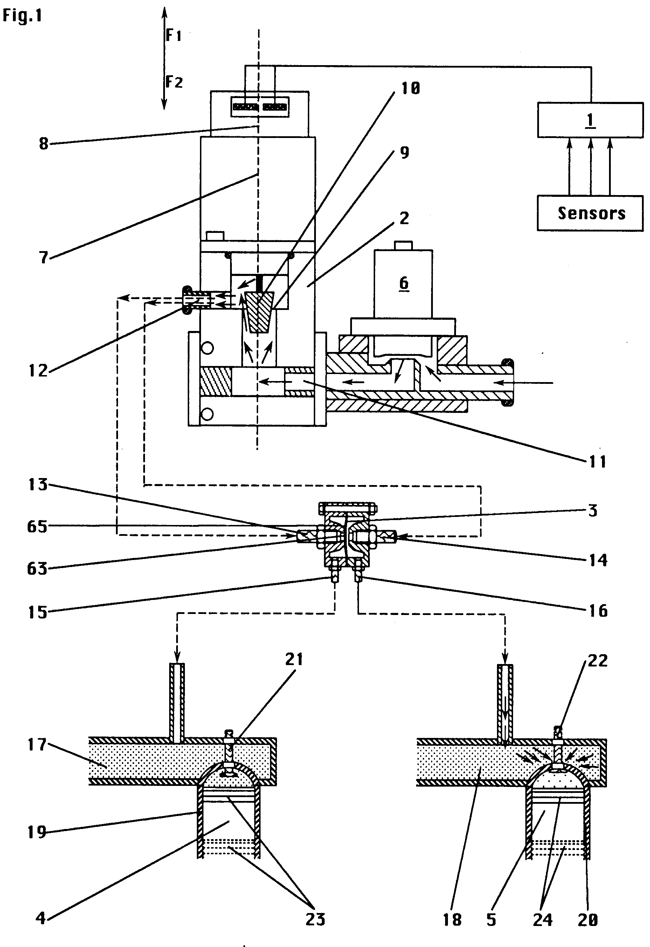

Fig.1 shows a central control unit 1, a metering valve 2 electrically bonded to the central control 1 and a timed valve 3 which sends the fuel to two combustion chambers 4, 5 of an internal combustion engine, both metering valve 2 and timed valve 3 forming the injection device.
The central control unit 1 processes the signals coming from a plurality of sensors to obtain control signals to be sent to the metering valve 2 connected to a pressure reducer 6. The metering valve 2 consists of a body 7 which supports a step motor 8 electrically bonded to the unit 1. Inside the body 7 a passage section 9 for the gas is defined; the passage section 9 is controlled by a truncated cone shutter 10 mechanically connected to the step motor 8, said shutter 10 moving in the directions of the arrows F₁, F₂ to vary the area of the passage section 9 so that the gas flow rate can be adjusted according to the requirements of the engine working state sensed by the sensors and controlled by the unit 1. The movements of the shutter 10 are continuous, although very quick.
The metering valve 2 presents an inlet 11 jointed to the pressure reducer 6 and an outlet 12 connected to two separate inlets 13, 14 of the timed valve 3, the timed valve 3 having two separate outlets 15, 16 respectively connected to a first intake pipe 17 and a second intake pipe 18 of the internal combustion engine.
The first intake pipe 17 belongs to a first cylinder 19, while the second intake pipe 18 belongs to second cylinder 20; the intake valve 21 of the first cylinder 19 is open, while the intake valve 22 of the second cylinder 20 is closed as the pistons 23, 24 move from the position indicated by a continuous line to the position indicated by a dashed line; therefore, the first cylinder 19 is found in intake stroke, while the second cylinder 20 in expansion stroke. In these strokes, the timed valve 3 sends the fuel near the intake valve 22 of the intake pipe 18. In fact, the pressure in both intake pipes 17, 18 is lower than the gas pressure inside the valve 3 and the diaphragm 65 closes the inlet orifice 63 of the timed valve 3.
The internal combustion engine comprises other not shown combustion chambers of no interest to the present description.

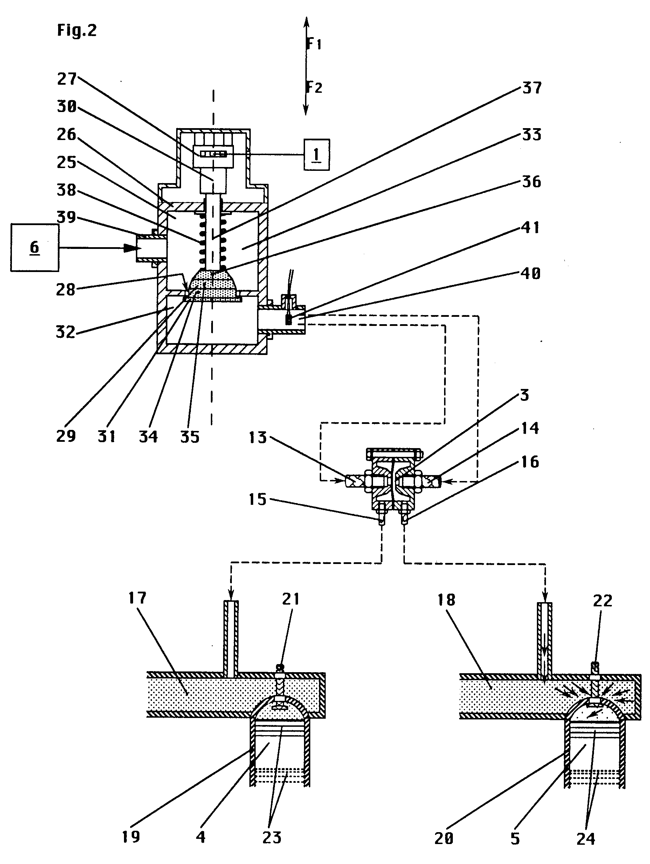

Fig.2 shows a central control unit 1, a metering valve 25 electrically bonded to the central control unit 1 and a timed valve 3 which sends the fuel to the combustion chambers 4, 5 of the internal combustion engine.
The metering valve 25 comprises a body 26 which supports a step motor 27 electrically bonded to the unit 1. Inside the body 26 an annular opening 28 is defined for allowing the passage of the gas, the annular opening 28 being controlled by a shutter 29 consisting of four superimposed parts; the shutter 29 being mechanically connected to the step motor 27 by means of a reduction gear 30 and a connecting rod 37. The shutter 29 moves in the directions of the arrows F₁, F₂ to vary the area of the annular opening 28 and adjust the gas flow rate according to the engine working state sensed by the sensors and controlled by the unit 1.
A first lower part 31 of the shutter 29 is shaped like a plate for closing the annular opening 28 between two cavities 32, 33; a second cylindrical part 34 has a shorter diameter than the diameter of the opening 28 to allow the passage of the gas thorough the opening 28 when the plate 31 maintains said opening 28 open; a third truncated cone part 35, the basis of which is jointed to the upper side of the second cylindrical part 34, has a first lateral surface with a first inclination; a fourth truncated cone part 36, the basis of which is integral with the upper side of the third truncated cone part 35, has a second lateral surface with a second inclination steeper than the inclination of the third part 35.
The step motor 27 acted by the unit 1 transmits an alternating movement to the shutter 29 through the reduction gear 30 and the connecting rod 37, the alternating movement having a different amplitude and frequency according to the working state of the internal combustion engine. When the engine is idling or low loaded the alternating movement allows the plate 31 to open and close the annular opening 28; during middle, high and full load phases, the alternating movement has lower frequencies and the control of the gas flow rate is effected by the upper parts 35, 36 of the shutter 29.
The valve 25 presents an inlet 39 connected to the pressure reducer 6 and an outlet 40 jointed to two separate inlets 13, 14 of the timed valve 3, the timed valve 3 hawing two separate outlets 15, 16 respectively connected to the first and second intake pipe 17, 18.
A resistor sensor 41 connected to the unit 1 is provided at the outlet 40; the sensor 41 cooperates with other known sensors (not shown) in measuring the flow rate of the fuel to be sent to the internal combustion engine.

As for the remainder the device is similar to the one shown in Fig.1.

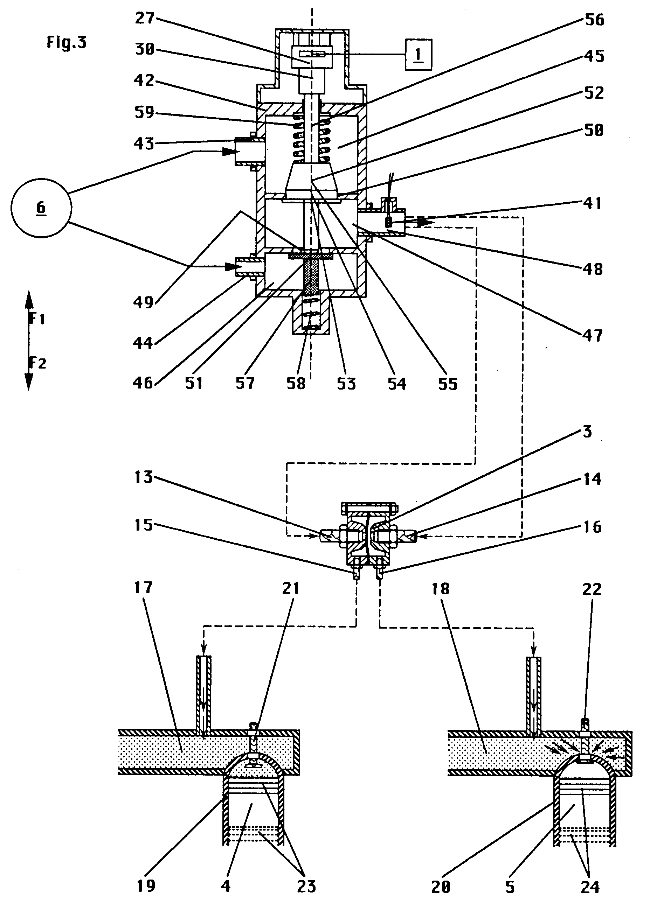

Fig.3 shows a metering valve consisting of a hollow box 42 connected to the pressure reducer 6 by means of two inlet tubes 43, 44; the tube 43 flows into a first cavity 45, while the tube 44 flows into a second cavity 46. A third intermediate cavity 47, between the first 45 and the second cavity 46, is connected to the timed valve 3 by means of a tube 48. A first passage opening 49 joints the second cavity 46 to the intermediate cavity 47 and a second annular opening 50 connects the first cavity 45 to the intermediate cavity 47. A first shutter 51 controls the first opening 49, while a second shutter 52 controls the second opening 50. The first shutter 51 consists of a plate, while the second shutter 52 is formed by plate 53, a cylindrical part 54 and a truncated cone part 55. A connecting rod 56 is integral with the shutter 52 and is manoeuvred by the step motor 27 through the reduction gear 30 to move the plate shutter 51 downwards. This one is integral with a manoeuvring rod 57 and is kept in contact with the connecting rod 56 by means of a reacting spring 58 stressing upwards the manoeuvring rod 57.
The step motor 27 receives control signals from the central control unit 1, to which it is electrically bonded, for transmitting alternating movements in the directions of the arrows F₁, F₂ to the connecting rod 56.
A pushing spring 59 presses the shutter 55 and the reacting spring 58 stresses the manoeuvring rod 57 integral with the plate 51 allowing a quick return of the plate 51 when the connecting rod 56 withdraws.

The manoeuvring rod 57, the plate 51 and the reacting spring 58 of the first shutter 29 form an elastic system with a low coefficient of friction, which elastically reacts to the alternating stresses of the connecting rod 56; therefore, the movements of the elastic system have the same frequency, a proportional amplitude and are nearly in phase with the movements of the connecting rod 56.
In the outlet tube 48 the resistor sensor 41 electrically bonded to the central control unit 1 is inserted for measuring the flow rate of the fuel coming out of the metering valve 42.
The central control unit 1 defines the frequency and the amplitude of the reversals of the step motor 27 according to the working state of the engine 1 measured by the sensors, particularly by the resistor sensor 41; the reduction gear 30 transforms the rotating movements of the step motor 27 into translations of the connecting rod 56 in the directions F₁, F₂, said translations generally following a sinusoidal law.
When the engine 1 is not in function or runs in cut-off condition, both shutters 51, 52 close the respective passage openings 49, 50 to prevent the gaseous fuel from being sent to the combustion chambers 4, 5.
When the engine 1 is idling or low loaded, both shutters 51, 52 are moved so that the gas can pass only through the passage opening 49.
During these working phases, the gas flow rate is defined by the maximum distance of the plate 51 from the passage opening 49 and by the frequency of the alternating translations of said plate 51 which allow the opening and closing of the passage opening 49. The amplitude and frequency of the alternating rotations of the step motor 27 are defined by the central control unit 1 according to the working state of the internal combustion engine. These rotations are changed into alternating movements of the connecting rod 56 by the reduction gear 30.
During middle, high and full load phases the gas flow rate defined by the distance of the plate 51 from the passage opening 49 is not sufficient for feeding the engine and, in addition, the measure of the gas flow rate is not reliable; therefore, in these phases, the flow rate of the gas to be sent to the engine is defined by the truncated cone part 55 of the shutter 52; in fact the area of the passage section thorough the opening 50 depends on the axial position of the truncated cone part 55; said area increases with the increasing of the downward excursion of the connecting rod 56.

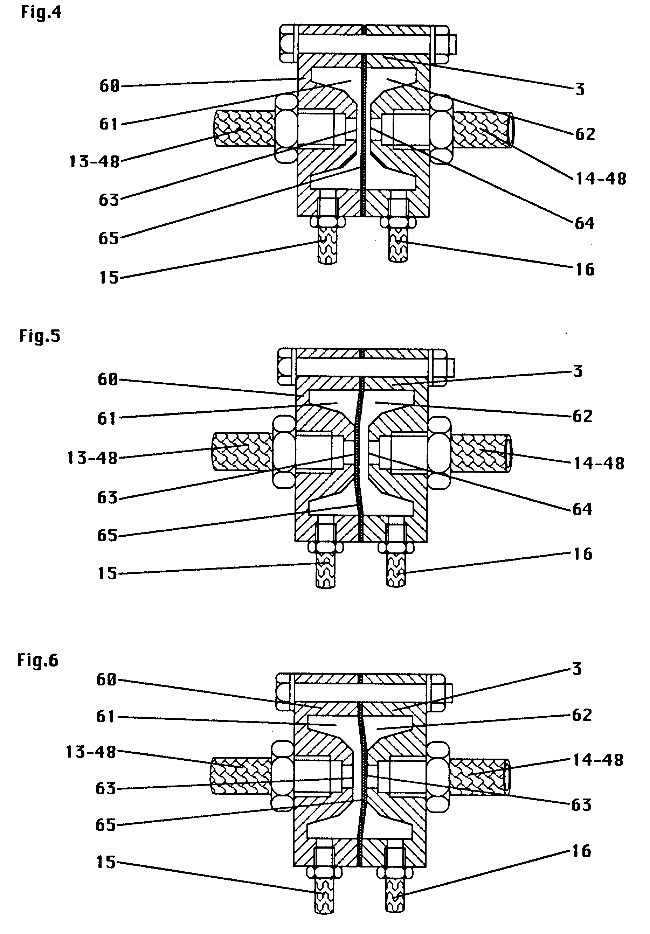

The timed valve shown in Figs 4, 5, 6 consists of a cap 60 delimiting two internal cavities 61, 62; the first cavity 61 communicates with the outlet tube 48 of the metering valve of Figs 1 to 3 through the inlet 13, while the second cavity 62 communicates with the same tube 48 through the inlet 14. The tube 15 flows into the first intake pipe 17 and the tube 16 into the second intake pipe 18 of the same Figures.
A first inlet orifice 63 is provided at the end of the inlet 13 in the first cavity 61, while a second inlet orifice 64 is found at the end of the inlet 14 in the second cavity 62. A diaphragm 65 divides the first cavity 61 from the second cavity 62, the diaphragm 65 being sensitive to the vacuum in both intake tubes 17, 18 (Figs 1, 2, 3); therefore, when the intake valve 21 of the first pipe 17 is open, the vacuum inside the first cavity 61 prevails on the vacuum inside the second cavity 62 and vice-versa.

When the cylinder 19 is found in intake stroke (open intake valve 21) and the cylinder 20 in expansion stroke (closed intake valve 22), the diaphragm 65 closes the delivery to the cylinder 19 (Fig.5); when both cylinders 19, 20 are not in intake stroke the diaphragm 65 returns to the rest equidistant position and the gas flows into both intake tubes 17, 18 (Fig.4).

When the cylinder 19 is found in expansion stroke (closed valve 21), and the cylinder 20 is in intake stroke (open valve 22), the diaphragm 65 closes the gas delivery to the cylinder 19 (Fig.5). Two valves of this type are sufficient for a four-cylinder engine.

Actually, the timed valve is bistable with a central equilibrium point of the diaphragm 65; the position of the diaphragm 65 depends on the difference in pressure inside both intake tubes 17, 18 of both cylinders 19, 20, to which the timed valve is connected.

## Claims

1. Injection device capable of phasing the flow rate of a gaseous fuel (l.p.g. or methane) which feeds an internal combustion engine, characterised by the fact that it comprises at least one metering valve (2,25,42) and one timed valve (3); the metering valve (2,25,42) having inlets (11,39,43,44) connected to a pressure reducer (6), mechanical elements (9,10,28,29,49,50,51,52) for metering the fuel to be sent to the relative timed valve (3), electromechanical apparatuses (8,27) for manoeuvring the mechanical elements (9,10,28,29,49,50,51,52) according to control signals processed by a central control unit (1) connected to sensors (41); the timed valve (3) presenting two separate inlets (13,14) communicating with the outlet (12,40,48) of the respective metering valve (2,25,42), two separate outlets (15,16) respectively connected to the intake tubes (17,18) of two cylinders (19,20) in phase opposition, and movable closing means (65) sensitive to the vacuum inside the intake pipe (17,18) of the cylinder (19,20) in intake stroke, said movable closing means (65) being capable of negating the fuel delivery to the intake pipe (17,18) of the cylinder (19,20) in intake stroke.

2. Device as in claim 1, wherein each timed valve (3) consists of a cap (60) delimiting two cavities (61,62) into which two inlet orifices (63,64) flow, said inlet orifices (63,64) being connected to the inlets (13,14) of the timed valve (3); the movable closing means (65) dividing both cavities (61,62) and closing one of the inlet orifices (63,64) to intercept the fuel flow to the intake pipe (17) when the vacuum inside said pipe (17) is higher than the vacuum inside the other intake pipe (18) and vice-versa.

3. Device as in claim 1, wherein the movable closing means (65) consist of a diaphragm (65) located inside the cap (60) of the timed valve (3); the diaphragm (65) dividing the internal part of the cap (60) into two cavities (61,62); the first cavity (61) communicates with the metering valve (2,25,42) through the inlet (13) and the orifice (63) and with the intake pipe (17) through the outlet (15); the second cavity (62) communicates with the metering valve (2,25,42) through the inlet (14) and the orifice (64) and with the intake pipe (18) through the outlet (16); when both cylinders (19,20) are not in intake stroke, the diaphragm (65) keeps the orifices (63,64) open to send the fuel to the relative intake tubes (17,18); when the cylinder (19) is in intake stroke the diaphragm (65) closes the first orifice (63) to intercept the fuel flow to the relative intake pipe (17), while said diaphragm (65) keeps the second orifice (64) open for sending the fuel to the relative intake pipe (18); vice-versa, when the cylinder (20) is in intake stroke, the diaphragm (65) closes the second orifice (64) for intercepting the fuel flow to the relative intake pipe (18) and keeps the first orifice open (63) for sending the fuel to the relative intake pipe (17).

4. Device as in claim 1, wherein the metering valve (2,25,42) consists of a body (7) which supports a step motor (8) electrically bonded to the unit (1); inside the body (7) a passage section (9) for the gas is defined, the passage section (9) being controlled by a truncated cone shutter (10) mechanically jointed to the step motor (8); the shutter (10) moves in two opposite directions (F₁,F₂) to vary the area of the passage section (9) in order to adjust the gas flow rate according to the requirements of the working state of the engine sensed by the sensors and controlled by the unit (1).

5. Device as in claim 4, wherein the metering valve (2,25,42) presents an inlet (11) jointed to the pressure reducer (6) and an outlet (12) connected to both separate inlets (13,14) of the timed valve (3).

6. Device as in claim 1, wherein the metering valve (25) comprises a body (26) supporting a step motor (27) electrically bonded to the unit (1); inside the body (26) a passage section (28) for the gas is defined, the passage section (28) being controlled by a shutter (29) consisting of four superimposed parts and mechanically connected to the step motor (27) through a reduction gear (30); the shutter (29) moves in two opposite directions (F₁,F₂) to vary the area of the passage section (28) and adjust the gas flow rate according to the requirements of the working state of the engine sensed by the sensors and controlled by the unit (1); a first lower part (31) of the shutter (29) is shaped like a plate as to be capable of closing the passage opening (28) between two cavities (32,33); a second cylindrical part (34) has a shorter diameter than the diameter of the passage opening (28); a third truncated cone part (35), with a basis integral with the upper side of the second cylindrical part (34), presents a first lateral surface with a first inclination; a fourth truncated cone part (36), with a basis integral with the upper side of the third truncated cone part (35), presents a second lateral surface with a second inclination steeper than the first inclination; a connecting rod (37) connects the reduction gear (30) of the step motor (27) to the shutter (29), while a reacting spring (38) pushes the shutter (29); the metering valve (25) presenting an inlet (39) connected to the pressure reducer (6) and an outlet (40) jointed to two separate inlets (13,14) of the timed valve (3).

7. Device as in claim 1, wherein the step motor (27) acted by the unit (1) transmits an alternating movement to the shutter (29), the alternating movement having a different amplitude and frequency according to the working state of the internal combustion engine; when the engine is idling or low loaded the alternating movement allows the cylindrical part (34) to open and close the passage opening (28); during middle, high and full load phases alternating movements have lower frequencies therefore, the control of the gas flow rate is effected by the upper parts (35,36) of the shutter (29).

8. Device as in claim 1, wherein a resistor sensor (41) bonded to the unit (1) is provided at the outlet (40,48) of the metering valve (2,25,42); said sensor (41) is used for measuring the flow rate of the fuel to be sent to the internal combustion engine.

9. Device as in claim 1, wherein the metering valve (42) consists of a hollow box (42) connected to the pressure reducer (6) by means of two inlet tubes (43,44); the first tube (43) flows into a first cavity (45), while the second tube (44) flows into a second cavity (46); a third intermediate cavity (47), located between the first cavity (45) and the second cavity (46), is connected to the timed valve (3) by means of an outlet tube (48); a first passage opening (49) connects the second cavity (46) to the intermediate cavity (47) and a second passage opening (50) connects the first cavity (45) to the intermediate cavity (47); a first shutter (51) controls the first passage opening (49) and a second shutter (52) controls the second passage opening (50), the first shutter (51) is a plate, while the second shutter (52) consists of a plate (53), a cylindrical part (54) and a truncated cone part (55); a connecting rod (56), integral with the second shutter (52), is manoeuvred by the electromechanical apparatus (27) to move the first shutter (51) in two opposite directions (F₁,F₂) so that the area of the passage opening (49) can vary; the first shutter (51), integral with a manoeuvring rod (57), is kept in contact with the connecting rod (56) by means of a reacting spring (58) stressing the first shutter (51) in the direction opposite to the push of the connecting rod (56); the electromechanical apparatus (27) receives control signals from the central control unit (1), to which it is electrically bonded, for transmitting alternating movements in opposite directions (F₁,F₂) to the connecting rod (56).

10. Device as in claim 1, wherein the manoeuvring rod (57), the plate (51) and the reacting spring (58) of the first shutter (51) form an elastic system with a low coefficient of friction which elastically reacts to the alternating stresses of the connecting rod (56) of the second shutter (52); therefore the movements of the elastic system have the same frequency, a proportional amplitude and are nearly in phase with the movements of the connecting rod (56).
